Europäisches Patentamt

European Patent Office

Office européen des brevets

(11) Publication number: **0 291 715**

**A1**

(12) **EUROPEAN PATENT APPLICATION**

(21) Application number: **88106356.4**

(22) Date of filing: **21.04.88**

(51) Int. Cl.⁴: **B65G 33/26**

(30) Priority: **30.04.87 US 44358**

(43) Date of publication of application:
**23.11.88 Bulletin 88/47**

(84) Designated Contracting States:
**DE FR GB IT**

(71) Applicant: **The Laitram Corporation**
**220 Laitram Lane**
**Harahan Louisiana 70123(US)**

(72) Inventor: **Lapeyre, James M.**
**13 Richmond Place**
**New Orleans Louisiana 70115(US)**

(74) Representative: **Scheidegger, Zwicky, Werner**
**& Co.**
**Stampfenbachstrasse 48 Postfach**
**CH-8023 Zürich(CH)**

(54) **Unitary screw conveyor apparatus.**

(57) Screw conveyor apparatus fabricated from integrally molded plastic modules (10A, 10B, 10C) is disclosed. The apparatus includes a multiplicity of modules axially aligned and joined or bonded so as to provide a unitary plastic screw conveyor of a desired length. A plastic axial member (12A, 12B, 12C) extending the length of the screw conveyor and which defines an elongated aperture (18A, 18B, 18C) of a non-circular cross-section is formed by joining or bonding the individual modules. In addition, each of the modules include a flight member (14A, 14B, 14C) which individually helically encircle not more than 360°, but when bonded together result in an overall flight member encircling more than 360° and which extends the length of the joined or bonded modules. The plastic screw conveyor is driven by a drive shaft (28) which has a non-circular cross-section and which is inserted through and cooperates with the non-circular aperture extending the length of the joined axial members. A drive or power source (34) is connected to the drive shaft for rotating the apparatus.

FIG. 1.

## UNITARY SCREW CONVEYOR APPARATUS

### Technical Field

This invention relates to screw conveyors, and more particularly to a multiplicity of integrally molded screw conveyor modules joined end to end with a permanent bond to form a unitary screw conveyor structure of any selected length.

### Background Art

As will be appreciated by those skilled in the art, helical shaped devices include such items as the common screw and the like. In addition, specialized helical shaped devices such as screw conveyors are well known for the transport of various types of bulk material. Such conveyors generally include a helical shaped member which rotates within a housing or trough such that rotation of the screw conveyor along its longitudinal or central axis results in movement of the bulk material along the length of the device. In the past, such conveyors were typically constructed from metal, and each conveyor was specifically designed for a particular purpose and of the necessary length. However, although most prior art conveyors were specifically designed to meet a particular application, there have been some attempts at providing a modular type conveyor. Examples of U.S. patents which disclose such modular conveyors include U.S. Patent No. 233,320 issued to A. L. Brewer on October 19, 1888; U.S. Patent No. 455,384 issued to H. Binkholz on July 7, 1891; U.S. Patent No. 525,194 issued to J. Dyson, et al on August 20, 1894; U.S., Patent No. 546,879 issued to J. Dyson, et al on September 24, 1895; U.S. Patent No. 1,090,956 issued to W. J. Zinteck on March 24, 1914; U.S. Patent No. 1,867,573 issued to V. G. Leach on July 19, 1932; U.S. Patent No. 2,394,163; U.S. Patent 2,492,915 issued to A. B. Carlson on December 27, 1949; U.S. Patent No. 3,178,210; U.S. PATENT No. 3,648,826 issued to Dean P. Brooks on March 1972; and U.S. Patent No. 3,705,644 issued to C. E. Kawchitch on December 12, 1972.

Thus, a review of the prior art patents reveals that to date, only the Kawchitch patent shows a modular plastic screw conveyor, and none of the prior art including Kawchitch even suggests bonding a multiplicity of plastic modules axially to produce a unitary plastic screw conveyor of any desired length with a continuous flight member extending the length of the conveyor. Therefore, it is an object of this invention to provide a unitary plastic screw conveyor having an axial member of any selected length and having a continuous flight member helically enclosing the full length of the axial member.

It is still a further object of the present invention to provide a unitary screw conveyor of any selected length formed of a multiplicity of modules which may be joined axially and wherein the flight member extends around the axial member greater than 360°.

Other objects and advantages will be obvious, and will in part appear hereinafter, and will be accomplished by the present invention which provides a conveyor apparatus having a unitary plastic screw conveyor which includes an axial member extending a selected or desired length. A flight member helically encircles more than 360° of the axial member and extends the length of the axial member.

The apparatus comprises a multiplicity of a substantially identical integrally molded plastic modules. Each of the modules includes an elongated axial member with a first and further end and with a non-circular aperture which extends coaxially through the axial member. Each of the modules also includes a flight member which helically encircles no more than 360° of the axial member and which extends between the first and further ends. Each of the ends of the axial members are formed to cooperate with one of the ends of another module. The plastic screw conveyor is formed by coaxially aligning the multiplicity of modules end-to-end such that the end of one module is in contact with the end of another module and so that the non-circular aperture through the modules are in register. The ends of the multiplicity of modules which are in contact are permanently joined or bonded so as to form a unitary screw conveyor having an axial member which defines an elongated aperture of a non-circular cross-section extending the length of the axial member. The unitary screw conveyor also includes a continuous flight member which encircles more than 360° of the axial member and which extends the length of the joined modules.

The screw conveyor formed of the multiplicity of permanently bonded modules is placed on a drive shaft which has a non-circular cross-section which may be substantially identical to the non-circular cross-section of the enlongated aperture. Whether the drive shaft has an identical cross-section or not, it is received by and cooperates with the non-circular elongated aperture in a non-rotating manner such that rotation of the drive shaft causes rotation of the unitary screw conveyor. A drive means is provided for rotating the drive shaft.

## Brief Description of the Drawings

The above features of the present invention will be more clearly understood form consideration of the following description in connection with the accompanying drawings in which:

Fig. 1 is an exploded pictorial view of screw conveyor apparatus incorporating the technology of this invention.

Fig. 2 is an elevation view of the apparatus of Fig. 1 fully assembled.

Fig. 3 is a partially sectional elevational view of one of the modules used in the screw conveyor apparatus of Fig. 1.

Fig. 4 is an elevational view of another embodiment of screw conveyor apparatus incorporating the features of this invention.

Figs. 5 and 6 are an end view and partially sectional elevational view of one of the modules making up the screw conveyor apparatus of Fig. 4.

Figs. 7, 8 and 9 show an end view, a pictorial view and a cross-sectional view of still other types of modules suitable for use in the apparatus of the present invention.

Figs. 10, 11 and 12 show modules suitable for use with the present invention having two, three and four flight members respectively.

## Detailed Description of the Invention

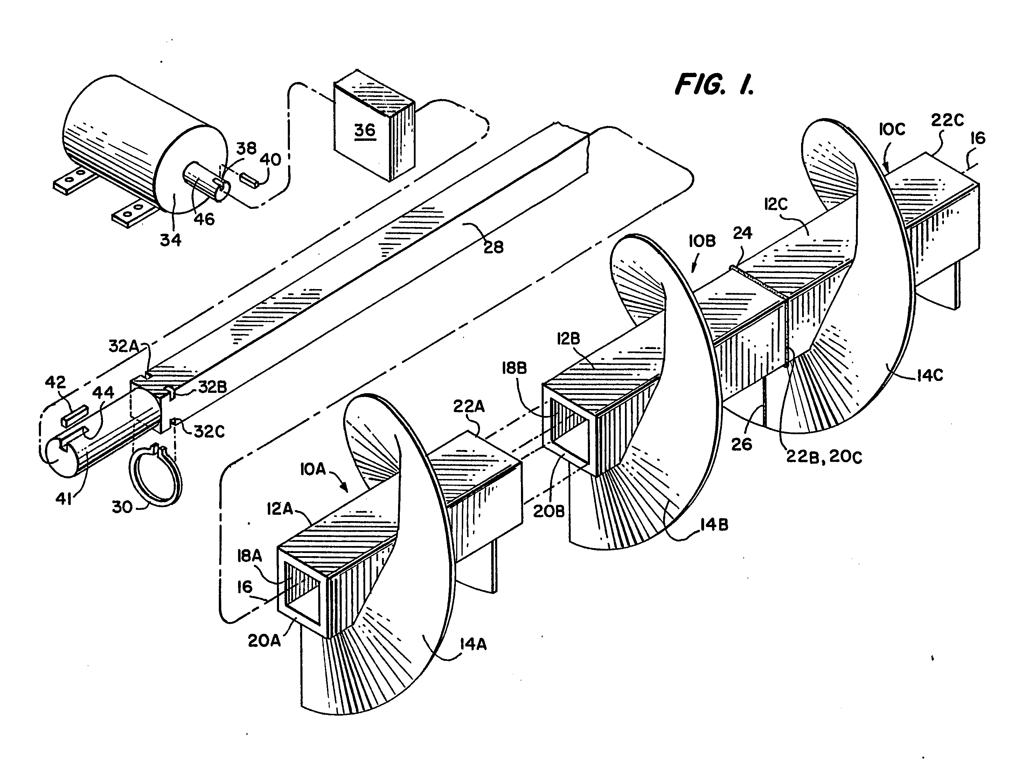

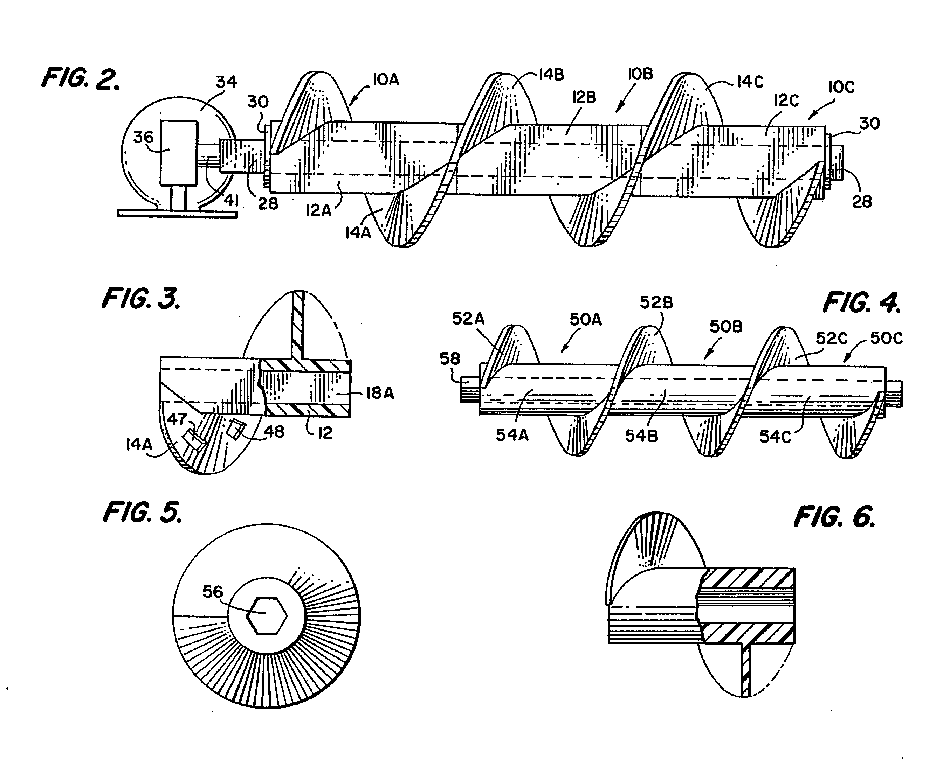

Referring now to Figs. 1 and 2, there is shown an exploded pictorial view and an assembled plan view respectively of a preferred embodiment of the screw conveyor apparatus of this invention. As shown, there are three integrally molded modules 10A, 10B and 10C for forming a screw conveyor of a selected length. The modules 10A, 10B and 10C are each integrally molded of a suitable plastic material such as polyethylene, polypropylene or polyurethane and include axial members 12A, 12B and 12C and flight members 14A, 14B and 14C. In the illustration of Fig. 1, the three modules are each aligned along longitudinal axis 16. Also, each module includes an aperture such as apertures 18A and 18B, which are defined by each module's axial member. As can be seen from module 10A, aperture 18A extends between two ends 20A and 22A. Each of the modules also includes a web or flight member 14A, 14B and 14C which helically encircle the respective axial members. In the preferred embodiment, the flight member will helically encircle substantially the full 360° but will actually be somewhat less than 360°, perhaps on the order of 359°. However, it should be understood that the flight member may also be selected to encircle substantially less than 360°. Also as is clearly shown, helical member 14A extends from one of the two ends 20A of axial member 12A to the second end 22A. That is, the helical member substantially extends the length of the axial member as it encircles approximately 360°. As shown, the two ends of the axial member of each of the modules are formed to cooperate with the ends of the axial member of the other modules.

In addition, confronting faces on the axial members such as faces 22B and 20C of adjacent modules 10B and 10C respectively, are permanently bonded in a fluid tight manner such that liquid on the outside of the screw conveyor cannot find its way to the aperture area 18B or 18C. This joining or permanent bonding may be achieved by any suitable technique including solvents, but is preferably accomplished by means of heating the two confronting faces of the axial members until they are partially melted and then joining the faces under pressure and allowing the two partially melted faces to solidify while in contact with each other thereby providing the fluid tight permanent bond or weld. A bead 24 between modules 10B and 10C illustrates the weld or bonding. Of course it should be appreciated that the formation of a bead such as 24 is not necessary in all types of welding or bonding, and in addition, such a bead may preferably be removed in the event such a bead is formed. In a similar manner, it would be appreciated that confronting face 22A of module 10A may be permanently bonded, joined or welded to confronting face 20B of module 10B in a similar manner as 10B and 10C were bonded. Thus it will be appreciated that any number of modules such as 10A, 10B and 10C may be joined to produce a continuous unitary screw conveyor of plastic material of any selected length.

In addition, it may also be preferable in some applications, but not all, that the flights of each module also be welded, bonded or joined in a manner similar to that of the confronting faces of the axial members. For example as shown in Fig. 1 the flights 14C of module 10C and flight 14B of module 10B are permanently bonded, welded or joined as indicated by the bead 26.

A non-circular drive shaft such as drive shaft 28 which has a square cross-section suitable for cooperating with the cross-section of the apertures in the individual modules, is inserted into and received by the full length of the joined multiplicity of modules. Thus, as can be seen drive shaft 28 extends the full length through apertures 18A, 18B and 18C (aperture 18C not shown) between face 20A of module 10A and confronting face 22C of module 10C. As will be discussed later, it is not necessary that the modules always use a square cross-section or that the drive shaft be of a square cross-section. The important requirement is that the aperture through the axial members of the individual modules be of a non-circular cross-section and that the cross-section of the drive shaft which is received by the apertures through the axial members be of a cooperating non-circular shape or cross-section. Thus, it will be appreciated that it is not even necessary that the cross-sectional shape of the drive shaft be precisely the same as that of the cross-sectional shape of the apertures in the modules, although such similarity of shape is preferable. It is only necessary that the cross-sectional shape of the drive shaft cooperate with the cross-sectional shape of the aperture in the modules such that rotation between the drive shaft and the modules cannot take place. Once drive shaft 28 has been fully inserted within the multiplicity of joined or welded modules, it is typically preferable to secure the modules on the drive shaft by suitable means. Although many techniques may be used to secure the modules on the shaft, a simple and inexpensive technique may be accomplished by the use of simple snap-rings such as snap-ring 30 placed in a groove around the perimeter of the drive shaft such as illustrated by grooves 32A, 32B and 32C. Thus, it will be appreciated that once snap-ring 30 is located in the grooves 32A, 32B and 32C, then it will be impossible for the modules to move over the shaft past the snap-ring. The other end although not shown may also be secured in a similar manner.

Drive shaft 30 as shown in Fig. 1 may be driven by any suitable driving means such as electric motor 34. As shown, electric motor 34 is coupled to a gear box 36 by means of a keyway 38 and key means 40. In a similar manner, the cylindrical part 41 of the drive shaft 28 also is coupled to the gear box 36 by a key 42 and a keyway 44. Thus, it will be appreciated that rotation of the shaft 46 of motor 34 will result in rotation of the drive shaft 28 which in turn will rotate the multiplicity of permanently welded or joined screw conveyor modules 10A, 10B and 10C. Thus, there has been at this point been described a unique apparatus which includes a unitary plastic conveyor portion of apparatus no where before used or found in the prior art.

Fig. 3 is an illustration of the module 10A showing a partial cross-section so as to reveal the aperture extending through the axial member 12 of the module. Fig. 3 also illustrates how the flight member 14A of a module may also include holes 47 and 48 to allow the passage of material from one side of the flight member to the other side.

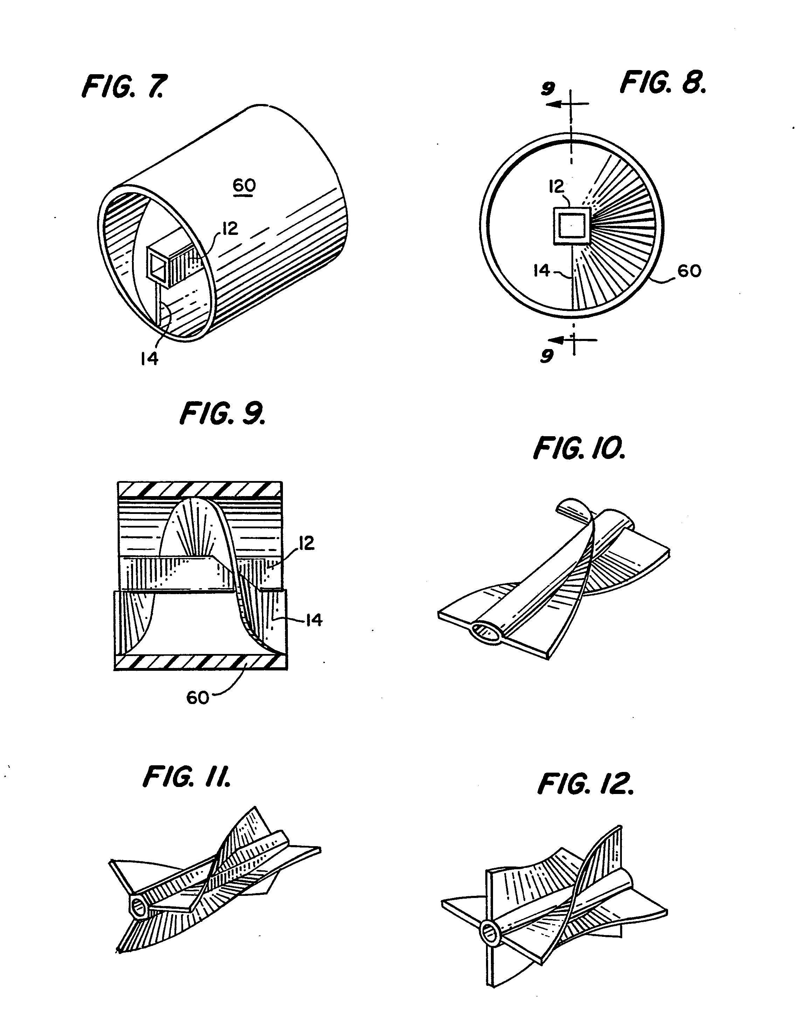

Referring now to Figs. 4, 5 and 6, there is shown another embodiment of the present invention. As shown, a series of modules 50A, 50B and 50C, each have a helical flight member 52A, 52B and 52C which encircle somewhat less than 360° of bonded or joined axial members 54A, 54B and 54C respectively. As can be seen, the arrangement of Figs. 4, 5 and 6 is substantially the same as that of Figs. 1, 2 and 3, except that the axial members 54A, 54B and 54C have a circular cross-section on the outside perimeter rather than a square cross-section. In addition the apertures through the axial members of the modules as illustrated in Fig. 5 by reference number 56, have a hexagon non-circular shape rather than a square non-circular shape. It will also be appreciated, that the drive shaft 58 which extends through the aperture 56 of the modules will typically have a cooperating hexagon shape. Also as was the case with the embodiment discussed in Figs. 1 through 3, the flights may also be welded to each other. Fig. 6 simply shows a partial cross-section of the plastic module having an axial member with a cylindrical outside surface and a hexagon shaped aperture.

Referring now to Figs. 7, 8 and 9, there is shown a perspective view, an end view, and a cross-sectional view of a different type module suitable for use in the present invention. As shown the modules illustrated in Fig. 7 through 9, are substantially the same as that illustrated in Figs. 1 through 3, except each of the modules further includes a large outer cylindrical shell member 60 which is integrally molded and formed with the flight member 14. It will be appreciated of course that welding of the modules illustrated in Fig. 7 through 9 will be accomplished in substantially the same way as was discussed with respect to the welding of modules illustrated in Figs. 1 through 6. To accomplish such welding, in addition to welding the hub member 12, it will typically also be desirable to weld both the flight 14 as well as the outer cylinder 60 of aligned and confronting modules.

Figs. 10, 11 and 12 show still other embodiments illustrating two, three and four flight members per module also suitable for use in the present invention. As can be seen from these illustrative examples, the flight members whether one, two, three or four do not cumulative encircle more than 360° of the axial member.

Thus, although there have been described to this point particular embodiments of the unitary screw conveying apparatus of the present invention, it is not intended that such specific references be considered as limitation upon the scope of this invention, except insofar as is set forth in the following claims.

## Claims

1. Screw conveyor apparatus including an axial member of predetermined length, and a flight member helically encircling said axial member, characterized by:

a multiplicity of integrally molded plastic modules, each having an aperture extending through an elongated axial member between a pair of ends adapted to receive means for rotating the modules along their axes,

at least one flight member on each module helically encircling said axial member and extending between said pair of ends,

mating structure on the end of the modules formed to register with an adjacent end of another module,

said multiplicity of modules being aligned axially with the elongated axial members of each module in axially confronting registered relationship with an axial member of another module except for the opposite ends of the modules in the aligned multiplicity of modules,

bonded joints between the axially aligned modules forming a unitary screw conveyor from the modules having a unitary axial member defining an elongated internal aperture of a cross-section shape uniformly extending along the length thereof with said apertures of said modules in alignment,

said screw conveyor additionally having a flight member encircling said unitary axial member over more than 360 degrees and extending substantially along the length of the unitary axial member,

a drive shaft for mating with said aperture along its length to retain the modules non-rotationally positioned with respect to the drive shaft and extending axially through the apertures of said aligned and bonded modules thereby to rotate said unitary screw conveyor, and

rotatable means coupled with the drive shaft for rotating said screw conveyor.

2. The screw conveyor defined in Claim 1 further characterized by:

individual flight members on each of the modules registered with the flight member of an adjacent module to form a unitary flight member assembly along the length of said axial member.

3. A screw conveyor defined in Claim 2 further characterized by bonded joints between at least some of the flight members on adjacent modules.

The screw conveyor apparatus of Claim 1 further characterized by: a further flight member on each module extending between said pair of ends, the two said flight members together enclosing no more than 360 degrees in non-overlapping relationship.

5. A screw conveyor apparatus of Claim 4 further characterized by the flight members on each module being in registration with a flight member of another adjacent module.

6. The screw conveyor apparatus of Claim 5 further characterized by joints between at least some of the flight members in registration with each other bonding the flight members on the respective modules together.

7. The screw conveyor apparatus of Claims 1, 2 or 5 further characterized by a multiplicity of two modules.

8. The screw conveyor apparatus of Claims 1, 2 or 5 further characterized by a multiplicity of modules greater than two.

9. The screw conveyor apparatus of Claims 1, 2 or 5 further characterized by modules having substantially identical structure at opposite ends.

10. The screw conveyor apparatus of Claims 1, 2 or 5 further characterized by a cross-sectional shape of the outside of the axial member is substantially the same shape, somewhat larger than that of the cross sectional shape of the aperture.

11. The screw conveyor apparatus of Claims 1, 2, 5, 9, or 10 further characterized by a square cross sectional shape of said aperture.

12. The screw conveyor apparatus of Claims 1, 2 or 5 further characterized by a bond between the confronting ends of adjacent modules establishing a fluid tight structure about the aperture path extending through the axial member.

*FIG. I.*

FIG. 2.

FIG. 3.

FIG. 4.

FIG. 5.

FIG. 6.

**FIG. 7.**

**FIG. 8.**

**FIG. 9.**

**FIG. 10.**

**FIG. 11.**

**FIG. 12.**

## EUROPEAN SEARCH REPORT

European Patent Office

| Category | Citation of document with indication, where appropriate, of relevant passages | Relevant to claim | CLASSIFICATION OF THE APPLICATION (Int Cl 4) |
|---|---|---|---|
| | **DOCUMENTS CONSIDERED TO BE RELEVANT** | | B 65 G 33/26 |
| D,X | US - A - 3 705 644 (KAWCHITCH)<br>* Totality * | 1-3,7-9 | |
| D,Y | | 5,6 | |
| D,A | | 10,11 | |
| Y | EP - A1 - 0 138 066 (LAITRAM)<br>* Fig. 12 * | 10,11 | |
| A | CA - A - 1 206 115 (MC CONNELL)<br>* Fig. 1 * | 4 | |
| A | US - A - 4 645 557 (PEDERSON)<br>* Abstract * | 12 | **TECHNICAL FIELDS SEARCHED (Int Cl 4)**<br><br>B 29 C<br>B 65 G |

The present search report has been drawn up for all claims

| Place of search | Date of completion of the search | Examiner |
|---|---|---|
| VIENNA | 08-07-1988 | BAUMGARTNER |